# EUROPÄISCHE PATENTANMELDUNG

(11) **EP 0 566 904 A1**
(43) Veröffentlichungstag der Anmeldung: **27.10.1993**
(21) Anmeldenummer: 93105179.1
(22) Anmeldetag: 29.03.1993
(51) Int. Cl.: B62B 3/06

(54) **Gabelhubwagen**

(30) Priorität: 02.04.1992 DE 4211029
(71) Anmelder: Linde Aktiengesellschaft, D-65189 Wiesbaden (DE)
(72) Erfinder: Beaudrap, François, F-86530 Cenon-Sur-Vienne (FR)
(74) Vertreter: Schaefer, Gerhard, Dr.

(57) **Zusammenfassung**

Ein Gabelhubwagen mit auf Lastrollen abgestützten, anhebbaren Gabeln (1) weist vor und/oder hinter den Lastrollen (2) Kletterhilfen auf, die jeweils von einer an der Unterseite der Gabeln (1) angeformten geradlinigen Abschrägung (A,B) in vertikaler Richtung gebildet werden. Die erfindungsgemäßen Kletterhilfen stellen einfache und wirkungsvolle Mittel zum Überwinden von Hindernissen dar. Die Gabel (1) ist bevorzugt zumindest im Bereich der vor der Lastrolle (2) angeordneten Abschrägung (A) gegossen, um auf einfache Weise beliebige Aufstandsflächen (A1,A2) zu erhalten.

## Beschreibung

Die Erfindung betrifft einen Gabelhubwagen mit auf Lastrollen abgestützten, anhebbaren Gabein, die vor und/oder hinter den Lastrollen Kletterhilfen aufweisen. Derartige Gabelhubwagen, die auch als Niederhubwagen bezeichnet werden, dienen in erster Linie zum Horizontaltransport von Paletten. Gabelhubwagen werden im wesentlichen als Handgabelhubwagen und als Elektro-Gabelhubwagen in Geh-, Sitz und Standausführung geliefert. Auch sogenannte Komissionierer fallen unter diese Gattung.

Um Hindernisse, wie z.B. Bodenbretter von Paletten, Türschwellen oder Kanten an Laderampen zu überwinden, sind die Gabein oft vor und hinter den Lastrollen mit Kletterhilfen in Form von Kletterrollen versehen. Bei Gabelhubwagen, die keine Kletterhilfen aufweisen, ist das Einfahren in unbeladene oder nur leicht beladene Paletten, die mit Bodenbrettern versehen sind, erschwert, weil die Palette von den Lastrollen meist weggeschoben wird. Es ist in solchen Fällen nötig, die Palette festzuhalten oder den Gabelhubwagen mit Kletterrollen auszustatten . Die Herstellung von mit Kletterrollen versehenen Gabein verteuert einen Gabelhubwagen. Darüber hinaus ist es in vielen Fällen trotz Kletterrollen noch schwierig genug, Hindernisse auf der Fahrbahn zu überwinden.

Der vorliegenden Erfindung liegt die Aufgabe zugrunde, einen Gabelhubwagen der eingangs genannten Art zur Verfügung zu stellen, der mit einfachen und wirkungsvollen Mitteln zum Überwinden von Hindernissen ausgestattet ist.

Diese Aufgabe wird erfindungsgemäß dadurch gelöst, daß die Kletterhilfen jeweils von einer an der Unterseite der Gabeln angeformten vertikalen Abschrägung gebildet werden. Solcherart gestaltete Gabeln sind praktisch nicht teurer als herkömmliche Gabeln, wobei dennoch das Erklettern von Hindernissen ermöglicht ist. Darüber hinaus ist die erfindungsgemäße Kletterhilfe in der Funktion besser und deshalb universeller einsetzbar als eine herkömmlichen Kletterhilfe, die aus einer vor bzw. hinter der Tragrolle angeordneten Kletterolle besteht. Bei Einsatz einer Kletterolle ist nämlich durch deren ortsfeste Höhenposition der Einsatzbereich festgelegt, in dem die Kletterhilfe wirksam ist. Hingegen weist die erfindungsgemäße Abschrägung insbesondere dann, wenn die Abschrägung im wesentlichen geradlinig verläuft, keine Höhenabhängigkeit auf: Unabhängig davon, wie hoch beispielsweise das Bodenbrett einer Palette ist, ergeben sich am Berührpunkt zwischen der Abschrägung der Gabel und dem Bodenbrett der Palette immer gleiche Verhältnisse. Beim Einfahren in leere Paletten, die mit Bodenbrettern versehen sind, fahren die Gabeln mit den Abschrägungen auf das Bodenbrett auf, so daß die Palette durch das Gewicht der Gabeln festgehalten wird. Dabei sind die Aufstandsflächen der Gabeln im Bereich der Abschrägungen so bemessen, daß einerseits das in der Regel aus Holz bestehende Bodenbrett nicht verletzt (zerschnitten) wird und andererseits der Reibungswiderstand beim Aufschieben der Gabeln auf das Bodenbrett nicht zu hoch wird, um ein Wegschieben der Palette zu verhindern.

Die Gabeln der gattungsgemäßen Gabelhubwagen bestehen in der Regel aus Stahlblech und weisen im Querschnitt gesehen ein umgekehrtes U-Profil auf. Je nach der Tragkraftklasse des Gabelhubwagens hat das Stahlblech der Gabeln eine bestimmte Dicke, wodurch auch zunächst die Aufstandsfläche im Bereich der erfindungsgemäßen Abschrägungen definiert ist. Eine Vergrößerung der Aufstandsfläche kann dadurch erreicht werden, daß die Außenenden der Stege des U-Profils im Bereich der Abschrägungen nach innen gebogen werden oder dort zusätzliches, die Aufstandsfläche vergrößerndes Material beispielsweise durch Schweißen angebracht wird. Weitaus vorteilhafter ist es jedoch, wenn gemäß einer Weiterbildung der Erfindung die Gabeln zumindest im Bereich der vor der Lastrolle angeordneten Abschrägung gegossen sind. Beim Einsatz von gegossenen Gabelspitzen kann sehr leicht jede beliebige Aufstandsfläche hergestellt werden, unabhängig davon, wie dick das Stahlblech ist, aus dem die Gabeln gefertigt sind. Darüber hinaus wirkt die auf der Aufstandsfläche der Abschrägungen durch das Gießen entstandene Gußhaut reibungsvermindernd beim Aufschieben der Gabel auf das Bodenbrett der Palette und auf andere Hindernisse.

Weitere Vorteile und Einzelheiten der Erfindung werden anhand des in den Figuren schematisch dargestellten Ausführungsbeispieles näher erläutert. Dabei zeigt:
- Figur 1: eine Seitenansicht eines Gabelhubwagens;
- Figur 2: einen Schnitt durch eine Gabel und eine Palette beim Einfahren der Gabel in die Palette;

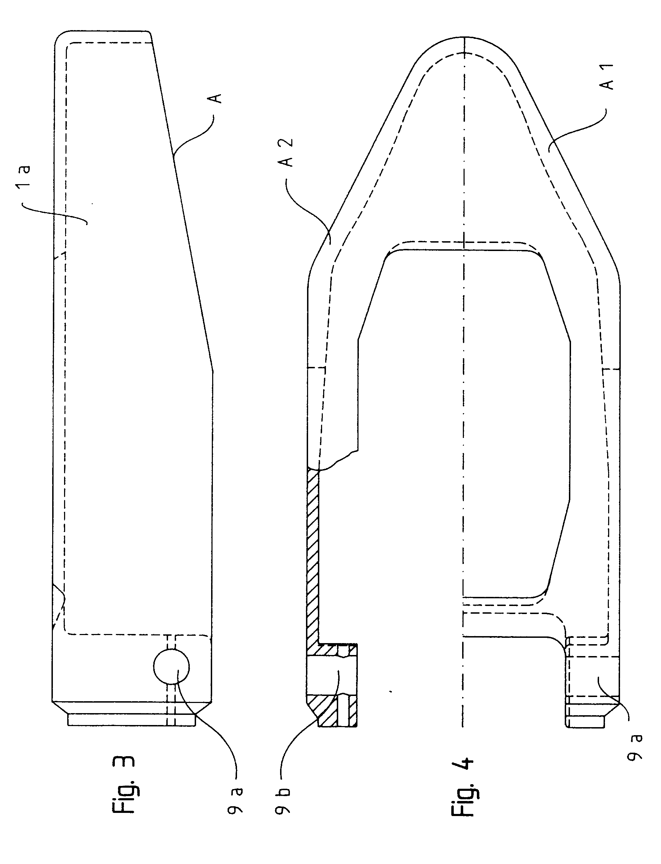

- Figur 3: eine Seitenansicht einer gegossenen Gabelspitze
- Figur 4: eine Draufsicht auf die Gabelspitze gemäß Figur 3.

Ein in diesem Ausführungsbeispiel als Elektro-Deichselhubwagen ausgebildeter Gabelhubwagen weist anhebbare Gabeln 1 auf. Die Gabeln 1 haben jeweils ein - im Querschnitt gesehen - umgekehrtes U-Profil und sind auf Lastrollen 2 in Tandem-Anordnung abgestützt. Es ist selbstverständlich auch möglich, jeweils eine einzelne Lastrolle an Stelle von zwei Lastrollen in Tandem-Anordnung vorzusehen.

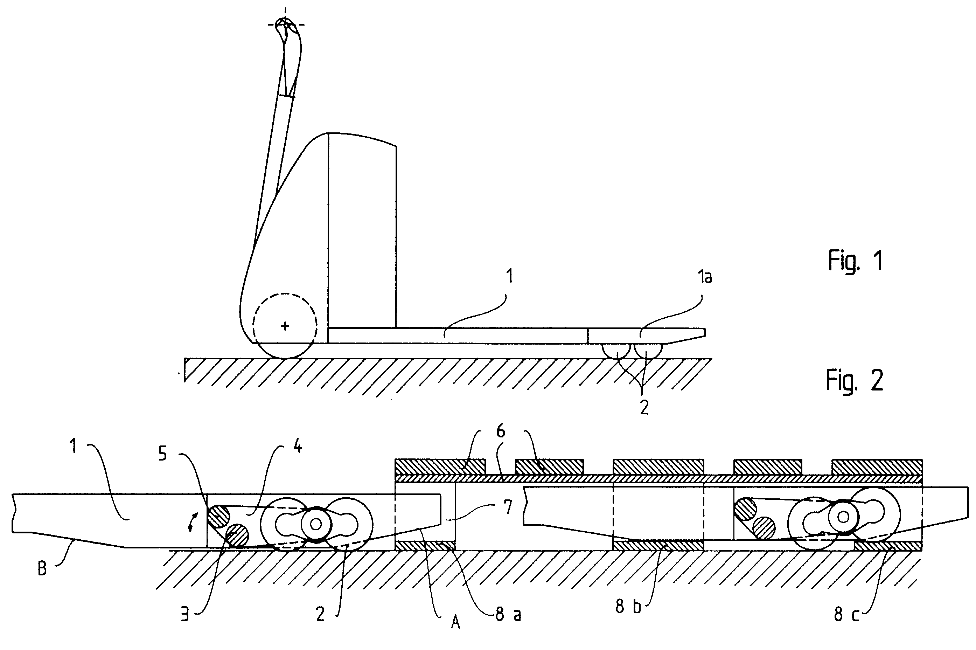

Wie in Figur 2 gezeigt, die einen Schnitt durch eine Gabel 1 und eine Palette beim Einfahren der Gabel in die Palette zeigt, sind die Lastrollen 2 mit Hilfe einer auf einem Bolzen 3 gelagerten Kniehebelanordnung 4, die mittels eines in der Figur nicht dargestellten, an einem Bolzen 5 angreifenden Hubgestänges schwenkbar ist, nach unten ausfahrbar. Beim Ausfahren werden dementsprechend die Gabeln 1 angehoben. Dargestellt ist in Figur 2 jedoch die abgesenkte Stellung einer Gabel 1.

In Figur 2 ist darüber hinaus eine Palette im Schnitt dargestellt. Die Palette weist rechtwinklig zueinander angeordnete Deckbretter 6, Abstandsklötze 7 und Bodenbretter 8a, 8b und 8c auf.

Jede Gabel 1 ist an der Unterseite im Bereich vor und hinter den Lastrollen 2 mit einer geradlinigen vorderen Abschrägung A und einer geradlinigen hinteren Abschrägung B in vertikaler Richtung versehen. Dabei sind die beiden Außenenden der Stege des U-Profils der Gabel 1 parallel zueinander abgeschrägt. Beim Einschieben der Gabel 1 in die Palette (dargestellt im linken Teil von Figur 2) oder beim Auffahren auf ein Hindernis trifft die Gabelspitze in Abhängigkeit von der Höhe des Bodenbretts 8a und in Abhängigkeit vom Neigungswinkel der Abschrägung A an einem bestimmten Punkt auf das Bodenbrett 8a auf und wird auf dieses aufgeschoben. Dabei wird die Gabel 1 kontinuierlich angehoben bis die vordere, in der Figur rechte Lastrolle 2 in Eingriff kommt mit dem Bodenbrett 8a. Im linken Teil von Figur 2 ist eine Stellung gezeigt, in der sich die Palette vollständig auf der Gabel 1 befindet.

Der geschilderte Ablauf funktioniert auch in umgekehrter Richtung, also beim Ausschieben der Gabel 1, wobei dann die Abschrägung B zum Einsatz kommt. Der Neigungswinkel der Abschrägungen A und B und die Aufstandsflächen sind so bemessen, daß die zum Ein- und Ausschieben der Gabel 1 notwendige Kraft gering ist und die Palette durch das Gewicht der Gabel 1 festgehalten wird.

Besonders zweckmäßig ist es, wenn die Gabelspitzen getrennt von der Gabel 1 als gegossene Bauteile 1a hergestellt werden. Dadurch können auf einfache Weise beliebig geformte Aufstandsflächen A1 und A2 vorgesehen werden. Darüber hinaus vermindert die durch das Gießen entstandene Gußhaut die Reibung beim Ein- und Ausfahren der Gabel in bzw. aus der Palette. Zugleich ist es fertigungstechnisch ohne großen Aufwand möglich, die zur Aufnahme des Bolzens 3 nötigen koaxialen Bohrungen 9a und 9b einzubringen. Bei reinen Stahlblechkonstruktionen sind hierzu nämlich Schweißarbeiten erforderlich, um Verstärkungsmaterial anzubringen, da die Wanddicke des U-Profils als Lagerstelle für den Bolzen 3 nicht ausreicht. Werden die Bohrungen vor dem Aufschweißen des Verstärkungsmaterials sowohl in diese als auch in die Stege des Hohlprofiles eingearbeitet, so ist es schwierig, die Koaxialität der Bohrungen beim Aufschweißen des Verstärkungsmaterials zu gewährleisten. Unter Umständen kommt es dabei zu Schweißverzug, der dann Richtarbeiten notwendig macht.

## Patentansprüche

1. Gabelhubwagen mit auf Lastrollen abgestützten, anhebbaren Gabeln, die vor und/oder hinter den Lastrollen Kletterhilfen aufweisen, **dadurch gekennzeichnet**, daß die Kletterhilfen jeweils von einer an der Unterseite der Gabeln (1) angeformten Abschrägung (A,B) in vertikaler Richtung gebildet werden.

2. Gabelhubwagen nach Anspruch 1, **dadurch gekennzeichnet**, daß die Abschrägung (A,B) im wesentlichen geradlinig verläuft.

3. Gabelhubwagen nach Anspruch 1 oder 2, **dadurch gekennzeichnet**, daß die Gabeln (1) zumindest im Bereich der vor der Lastrolle (2) angeordneten Abschrägung (A) gegossen sind.
